(19) **Europäisches Patentamt**

**European Patent Office**

**Office européen des brevets**

(11) **EP 0 367 295 B1**

(12) **EUROPEAN PATENT SPECIFICATION**

(45) Date of publication and mention
of the grant of the patent:
**15.01.1997 Bulletin 1997/03**

(51) Int Cl.⁶: **G06T 7/00**

(21) Application number: **89120503.1**

(22) Date of filing: **06.11.1989**

(54) **A method of detecting the position of an object pattern in an image**

Verfahren zur Feststellung der Lage eines Objektmusters in einem Bild

Méthode de détection de la position d'un modèle d'objet dans une image

(84) Designated Contracting States:
**DE FR GB**

(30) Priority: **04.11.1988 JP 278691/88**

(43) Date of publication of application:
**09.05.1990 Bulletin 1990/19**

(73) Proprietor: **MATSUSHITA ELECTRIC INDUSTRIAL
CO., LTD.
Kadoma-shi, Osaka-fu, 571 (JP)**

(72) Inventors:
• **Okumura, Kazumasa
Uji-shi Kyoto (JP)**
• **Mizuoka, Seiji
Katano-shi Osaka (JP)**

(74) Representative: **Schwabe - Sandmair - Marx
Stuntzstrasse 16
81677 München (DE)**

(56) References cited:
**US-A- 4 581 762**

## Description

BACKGROUND OF THE INVENTION

1. Field of the invention:

The present invention relates to a method of detecting the position of an object pattern in an image according to claim 1.

2. Description of the prior art:

A method of detecting the position of an object pattern in an image is already known from US-A-4,581,762. This known method comprises the steps of preparing a reference pattern which has a pattern and a background which are composed of one or more pixels each having a value, the shape of said pattern corresponding to said object pattern, the value of each pixel of said pattern being different from said of each pixel of said background. Furthermore with this known method the image is divided into a plurality of sections and moreover an area having two or more of said sections is arbitrarily selected, the shape of said area corresponding to that of said reference pattern. Moreover data from each of said sections are obtained and a sum of products of the value of each pixel and the data of each section corresponding to the pixel is formed. With this known method said area is moved to another position in the image and some of the foregoing steps are repeated.

With this known method and also with further conventional methods a position of a surface pattern of an integrated circuit is detected by a so-called template matching method in which a reference pattern having the shape to be detected has been previously registered as a template, an image is picked-up by a television camera, the pattern of each section of the picked-up image is binary-coded, and then the binary-coded data of the pattern are sequentially compared with the template for detecting the position where the best matching between the two is obtained.

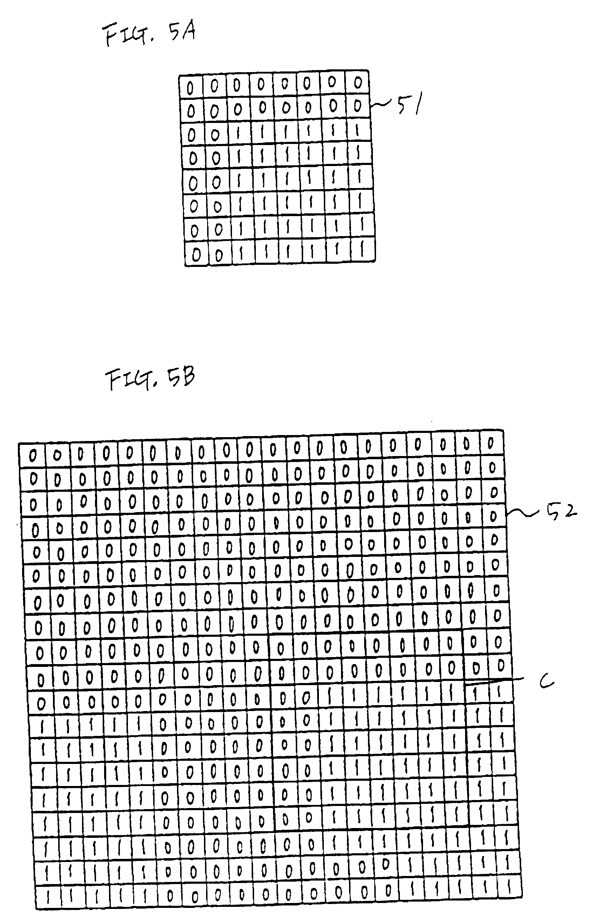

This method will be described in more detail with reference to Figs. 5A and 5B. Figure 5A shows a binary-coded template 51 in which the pattern to be detected is binary-coded by denoting a white pixel by the digit "1" and denoting a black pixel by the digit "0". A binary-coded image 52 to be inspected is shown in Fig. 5B. In practice, the template 51 is produced only in a computer, and not actually formed in a physical body as shown in Fig. 5A, and thus the processes described below are conducted in the computer. The template 51 is superimposed over an area in the top left-hand corner of the object image 52, and the matching status between the facing pixels is examined. If "0" is superimposed on "0" or "1" on "1", it is determined that the pixels match each other. Next, the template 51 is moved by one pixel to the right for performing the examination in the same manner. Such examination is repeated until the template 51 is moved to the bottom right-hand corner of the image 52. Thereafter, the area having the highest matching rate is determined as the recognition point. In the case of the image 52, the area indicated by C has the highest matching rate (i.e., 64), and, therefore, the area C is detected as the recognition point. In other words, the area C has the object pattern.

However, the above method has a drawback in that, if the lightness of a body changes, the binary-coded image of the body also changes, leading to a recognition error or a total failure of recognition. For example, when the body from which the binary-coded image of Fig. 5B is obtained under a bright condition is processed under a dark condition to obtain a binary-coded image thereof, all pixels of the obtained binary-coded image turn into the state of "0", leaving no pixels in the state of "1". Therefore, the matching rate will become the same at any position, resulting in that the position of the object pattern cannot be determined. The above-mentioned drawback is caused also by changing the reflectivity of the body to be inspected or by changing the illuminance on the body.

SUMMARY OF THE INVENTION

It is an object of the present invention to provide a method of detecting the position of an object pattern in an image in which the position can be accurately and stably detected even when the image has been obtained under a dark condition or from a body the reflectivity of which changes or under a changing illumination.

According to the present invention this object is solved by a method of detecting the position of an object pattern in an image comprising the steps of:

(a) preparing two or more reference patterns which have a pattern and a background, said pattern and background being composed of one or more pixels each having a value regarding the brightness wherein the shape obtained from said patterns when said reference patterns are arranged in a predetermined geometrical or positional relationship corresponds to said object pattern, the brightness value of each pixel of said pattern being different from that of each pixel of said background, a part of each of said reference patterns being designated as a specific part;
(b) storing said positional relationship;
(c) dividing said image into a plurality of sections;
(d) selecting arbitrarily an area having two or more of said sections, the shape of said area corresponding to that of said reference pattern;
(e) obtaining brightness data from each of said sections;
(f) obtaining a sum of products of the brightness value of each pixel of both said reference pattern and other reference patterns and the brightness data of each section corresponding to the pixel;

(g) moving said area to another position in said image;

(h) repeating steps (e) to (g);

(i) selecting two or more image portions from which the sum having an extreme value or a value adjacent to said extreme value is obtained, for both said reference pattern and other reference patterns;

(j) obtaining the position in each of said selected portions which corresponds to said specific part or said other specific part;

(k) obtaining the positional relationships in each pair of said obtained positions;

(l) obtaining the pair having the positional relationship which is closest to said stored positional relationship; and

(m) deciding that the area which corresponds to said obtained pair is the one containing said object pattern.

In a preferred embodiment, the extreme value is the largest value among said obtained sums.

In a preferred embodiment, the extreme value is the smallest value among said obtained sums.

In a further preferred embodiment, the values of said pixels consist of 1, 0 and -1, and the total of said values is zero.

## BRIEF DESCRIPTION OF THE DRAWINGS

This invention may be better understood and its numerous objects and advantages will become apparent to those skilled in the art by reference to the accompanying drawings as follows:

Figure 1 illustrates examples object patterns and reference patterns.

Figure 2A illustrates a reference pattern used in an embodiment of the invention.

Figure 2B illustrates an image coded by brightness data from which the position of the object pattern is detected using the reference pattern of Fig. 2A.

Figure 3 illustrates an image which is obtained when the image of Fig. 2B darkens.

Figure 4A is a diagram for illustrating another embodiment of the invention.

Figure 4B is a diagram for illustrating the geometical or positional relationship of two reference patterns used in the other embodiment.

Figure 5A illustrates a template used in a prior art method.

Figure 5B illustrates a binary-coded image used in a prior art method.

## DESCRIPTION OF THE PREFERRED EMBODIMENTS

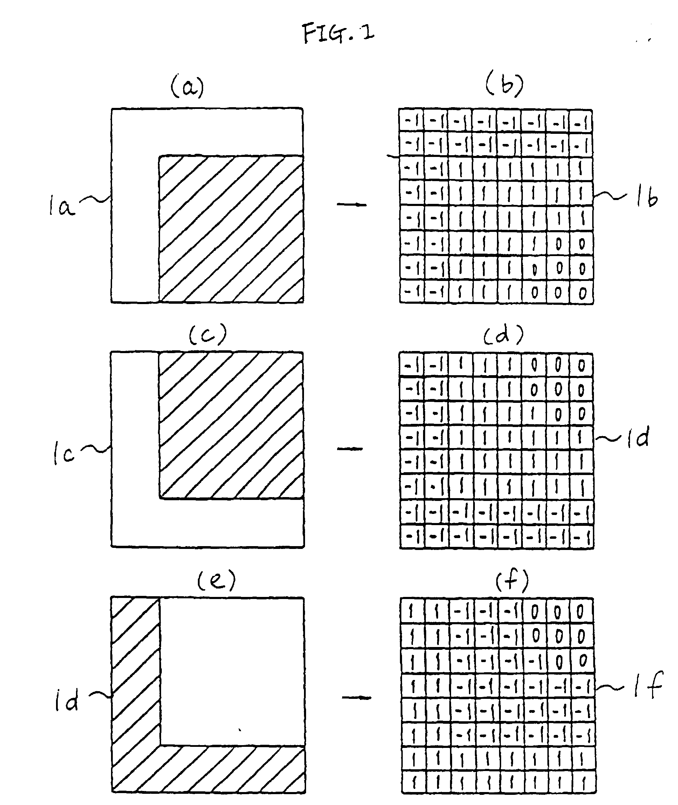

Figure 1 illustrates examples of a reference pattern useful in an embodiment of the invention. In Fig. 1, (a), (c) and (e) show object patterns 1a, 1c and 1e, and (b), (d) and (f) reference patterns 1b, 1d and 1f which correspond to the object patterns 1a, 1c and 1e, respectively. In the object patterns 1a, 1c and 1e, the hatched portions indicate high-brightness and whitish areas. The reference patterns 1b, 1d and 1f are divided into 64 (=8x8) sections or pixels. Each pixel is allocated with a brightness factor (1, 0 or -1) so that the reference patterns 1b, 1d and 1f represent respectively the object patterns 1a, 1c and 1e. In the embodiment, brightness factors are set so as to emphasize the contrast with the digit "1" designating a high-brightness portion and the digit "-1" a low-brightness portion. Pixels being at a position other than where the high-brightness portion border the low-brightness portion are allocated with the digit "0" so that the number of 1s equals the number of -1s as a result of normalization.

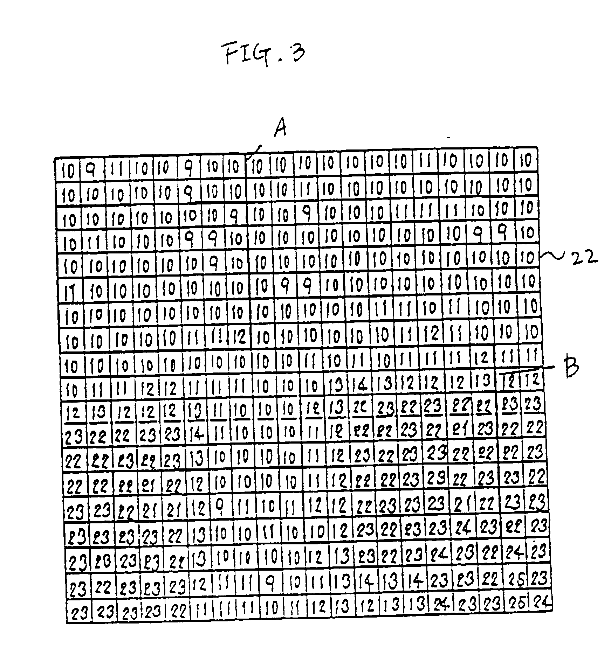

Figure 2B illustrates an image to be inspected in the embodiment of the invention. The image 22 of Fig. 2B is divided into 380(=20x19) sections (hereinafter, referred to as "pixels"). Each of the pixels is allocated with a brightness value or brightness data. In the image 22, the brightness data ranges from 21 to 51. A pixel having a higher brightness is allocated with a larger number, and a pixel having a lower brightness with a smaller number. If the image 22 is reformed in a binary-coded image under the conditions that, for example, the value of 40 is set as the threshold, pixels having a value greater than 40 are designated by "1", and pixels having a value smaller than 40 are designated by "0", the resulting image will become identical with the image 52 shown in Fig. 5B.

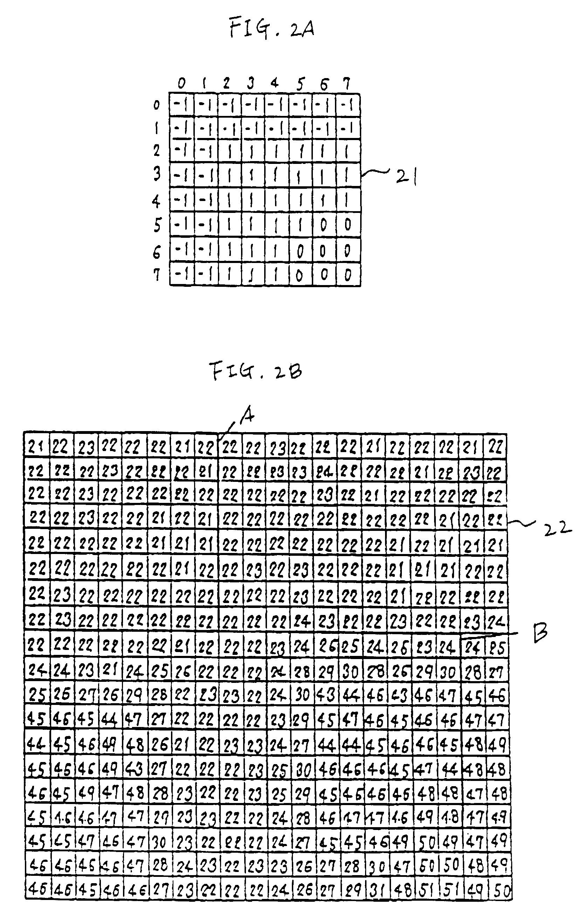

The procedures of detecting the position of the reference pattern shown in Fig. 2A (which is identical with the pattern 1b shown in (b) of Fig. 1) in the image 22 of Fig. 2B will be described. First, the reference pattern 21 is superimposed over the image 22 as shown by A in Fig. 2B. Then, the calculations for obtaining the sum of products of the value of each pixel of the reference pattern 21 and the value of each section of the area A are performed. That is, when the brightness factor of each pixel positioning at the ith row and jth column is denoted by $M_{ij}$ (both i and j ranging from 0 to 7) and the brightness data of each pixel positioning at the ith row and jth column in the area A denoted by $S_{ij}$, the calculation of $\Sigma$ $(M_{ij} \cdot S_{ij})$ is performed. The calculation thus performed produces the result of -4.

Next, the area is moved rightward by one pixel, and the calculations for obtaining the sum of products of the value of each pixel of the reference pattern 21 and the value of each section of the new area are performed in the same way as described above. The above procedure is repeated until the area comes to the bottom right-hand corner of the image, resulting in that the sum obtained from the area B shown in Fig. 2B is 1274 which is the greatest one. In the embodiment, the area from which the greatest sum is obtained is the recognition point, i.e., the area has the object pattern. Therefore, it is recognized that the area B has the object pattern. In an area where there is no variation in brightness, the obtained sum is zero, facilitating the recognition of the object pattern. This is caused by the fact that, when normalized, the total of the values of pixels in the reference pattern 21 is zero.

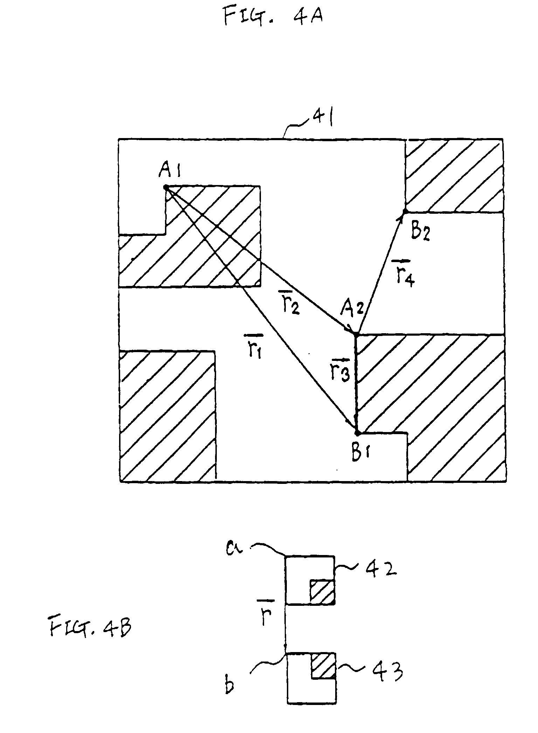

With reference to Fig. 3, the procedure in the case where the image to be inspected is dark will be described. In this case, the brightness data of each pixel of the image 22 becomes small and varies in a small range, as shown in Fig. 3. The calculations for obtaining the sum of products are conducted for each area in the same manner as described above, resulting in that the sum obtained from the area A is -4 and that from the area B is 302. The latter is the greatest one among the sums obtained from the image 22 shown in Fig. 3. In this way, even when the image is dark, it can be easily and reliably recognized that the area B has the object pattern.

When another pattern such as shown in (c) or (e) of Fig. 1 is to be detected, the procedure is conducted in the same manner as described above using another reference pattern such as shown in (b) or (d) of Fig. 1.

In the preferred embodiment the invention is performed using two or more reference patterns. In this case, the detection can be easily and reliably performed even when the image has similar patterns as shown in Fig. 4A. An example of the procedure of detecting an object pattern from the image 41 shown in Fig. 4A in which procedure two reference patterns are used will be described referring to Figs. 4A and 4B. Two reference patterns 42 and 43 are prepared, and their upper and left corners are designated as specific point a and b, respectively. A positional relationship $\vec{r}$ between the specific points a and b is established so that, when the two reference patterns 42 and 43 are arranged in accordance with the positional relationship $\vec{r}$, the combination of the two reference patterns 42 and 43 corresponds to the object pattern. The determined positional relationship is stored in a memory of a computer. Then, the calculations for obtaining the sum of products are performed in the similar manner as described above, for the reference pattern 42. Selected are two areas from which the greatest two values are obtained, or from which the values greater than those of eight adjacent areas and being the greatest. The positions corresponding to the point a in the selected two areas are indicated by A1 and A2 in Fig. 4A. Then, the above is repeated for the reference pattern 43, and the positions corresponding to the point b in the selected two areas are indicated by B1 and B2 in Fig. 4A. The positional relationships $\vec{r1}$ to $\vec{r4}$ between the points A1, A2, B1 and B2 are obtained, and compared with the previously stored positional relationship $\vec{r}$, resulting in that the positional relationship $\vec{r3}$ is the one closest to the previously stored positional relationships $\vec{r}$. The areas corresponding to the points A2 and B1 having the positional relationships $\vec{r3}$ is recognized as the areas having the object pattern. The positional relationships $\vec{r}$ may be designated by using either of an angle and a distance or by a combination of both.

In the above-described embodiments, the brightness factor of each pixel of the reference pattern is set so that the greatest sum of products is obtained at the area having the object pattern. Alternatively, the brightness factor may be set so that the smallest sum of products is obtained at the area having the object pattern.

## Claims

1. A method of detecting the position of an object pattern in an image, comprising the steps of:

   (a) preparing two or more reference patterns which have a pattern and a background, said pattern and background being composed of one or more pixels each having a value regarding the brightness wherein the shape obtained from said patterns when said reference patterns are arranged in a predetermined geometrical or positional relationship corresponds to said object pattern, the brightness value of each pixel of said pattern being different from that of each pixel of said background, a part of each of said reference patterns being designated as a specific part;
   (b) storing said positional relationship;
   (c) dividing said image into a plurality of sections;
   (d) selecting arbitrarily an area having two or more of said sections, the shape of said area corresponding to that of said reference pattern;
   (e) obtaining brightness data from each of said sections;
   (f) obtaining a sum of products of the brightness value of each pixel of both said reference pattern and other reference patterns and the brightness data of each section corresponding to the pixel;
   (g) moving said area to another position in said image;
   (h) repeating steps (e) to (g);
   (i) selecting two or more image portions from which the sum having an extreme value or a value adjacent to said extreme value is obtained, for both said reference pattern and other reference patterns;
   (j) obtaining the position in each of said selected portions which corresponds to said specific part or said other specific part;
   (k) obtaining the positional relationships in each pair of said obtained positions;
   (l) obtaining the pair having the positional relationship which is closest to said stored positional relationship; and
   (m) deciding that the area which corresponds to said obtained pair is the one containing said object pattern.

2. A method according to claim 1, wherein said extreme value is the largest value among said obtained sums.

3. A method according to claim 1, wherein said extreme value is the smallest value among said obtained sums.

4. A method according to claim 1, wherein said values of said pixels consist of 1, 0 and -1, and the total of said values is zero.

## Patentansprüche

1. Verfahren zum Erfassen der Position bzw. Stellung eines Objektmusters in einem Bild, das die Schritte aufweist:

(a) zwei oder mehr Bezugsmuster werden vorbereitet, die ein Muster und einen Hintergrund haben, wobei das Muster und der Hintergrund aus einem oder mehreren Bildelementen zusammengesetzt ist, die jeweils einen Wert hinsichtlich der Helligkeit haben, wobei die Form bzw. Gestalt, die von den Mustern erhalten wird, wenn die Bezugsmuster in einem vorbestimmten geometrischen oder positionsmäßigen Verhältnis angeordnet sind, das dem Objekt- bzw. Gegenstandmuster entspricht, der Helligkeitswert von jedem Bildelement des Musters von dem von jedem Bildelement des Hintergrundes unterschiedlich ist, wobei ein Teil von jedem der Bezugsmuster als ein spezifisches Teil benannt wird;
(b) das positionsmäßige Verhältnis wird gespeichert;
(c) das Bild wird in mehrere Abschnitte unterteilt;
(d) ein Bereich wird willkürlich ausgewählt, der zwei oder mehr der Abschnitte aufweist, wobei die Form bzw. Gestalt des Bereichs der des Bezugsmusters entspricht;
(e) Helligkeitsdaten werden von jedem der Abschnitte erhalten;
(f) eine Summe von Produkten der Helligkeitswerte von jedem Bildelement sowohl von dem Bezugsmuster als auch anderen Bezugsmustern und den Helligkeitsdaten von jedem Abschnitt, der dem Bildelement entspricht, wird erhalten;
(g) der Bereich wird zu einer anderen Position in dem Bild bewegt;
(h) die Schritte (e) bis (g) werden wiederholt;
(i) zwei oder mehr Bildabschnitte werden ausgewählt, von denen die Summe, die einen Extremwert oder einen Wert benachbart zu dem Extremwert hat, sowohl für das Bezugsmuster als auch andere Bezugsmuster erhalten wird;
(j) die Position in jedem der ausgewählten Abschnitte wird erhalten, die dem spezifischen Teil oder dem anderen spezifischen Teil entspricht;
(k) die positionsmäßigen Verhältnisse werden in jedem Paar der erhaltenen Positionen bzw. Stellungen erhalten;
(l) das Paar, das das positionsmäßige Verhältnis hat, das dem gespeicherten posititonsmäßigen am nächsten kommt, wird erhalten; und
(m) es wird entschieden, daß der Bereich, der dem erhaltenen Paar entspricht, derjenige ist, der das Objekt-bzw. Gegenstandsmuster enthält.

2. Verfahren nach Anspruch 1, in dem der Extremwert der größte Wert unter den erhaltenen Summen ist.

3. Verfahren nach Anspruch 1, in dem der Extremwert der kleinste Wert unter den erhaltenen Summen ist.

4. Verfahren nach Anspruch 1, in dem die Werte der Bildelemente aus 1, 0 und -1 bestehen, und die Gesamtheit der Werte 0 beträgt.

## Revendications

1. Procédé de détection de la position d'un modèle d'objet dans une image comprenant les étapes consistant à :

(a) préparer deux ou plusieurs modèles de référence qui possèdent un modèle et un arrière-plan, ledit modèle et ledit arrière-plan étant constitués d'un ou de plusieurs pixels ayant une valeur concernant la brillance, dans lequel la forme, obtenue à partir desdits modèles quand lesdits modèles de référence sont agencés selon une relation prédéterminée géométrique ou de position, correspond audit modèle d'objet, la valeur de brillance de chaque pixel dudit modèle étant différente de celle de chaque pixel dudit arrière-plan, un élément de chacun desdits modèles de référence étant désigné comme un élément spécifique ;
(b) stocker ladite relation de position ;
(c) diviser ladite image en une pluralité de sections ;
(d) choisir, de manière arbitraire, une zone ayant deux ou plusieurs desdites sections, la forme de ladite zone correspondant à celle dudit modèle de référence ;
(e) obtenir des données de brillance à partir de chacune desdites sections ;

(f) obtenir une somme de produits de la valeur de brillance de chaque pixel à la fois dudit modèle de référence et d'autres modèles de référence, et des données de brillance de chaque section correspondant au pixel ;

(g) déplacer ladite zone vers une autre position dans ladite image ;

(h) répéter les étapes (e) à (g) ;

(i) choisir deux ou plusieurs parties d'image à partir desquelles on obtient une somme ayant une valeur extrême ou une valeur adjacente à ladite valeur extrême, à la fois pour ledit modèle de référence et pour d'autres modèles de référence ;

(j) obtenir la position, dans chacune desdites parties sélectionnées, qui correspond audit élément spécifique ou audit autre élément spécifique ;

(k) obtenir les relations de position dans chaque couple desdites positions obtenues ;

(l) obtenir le couple ayant la relation de position qui est la plus proche de ladite relation de position stockée ; et

(m) décider que la zone qui correspond audit couple obtenu est celle contenant ledit modèle d'objet.

2. Procédé selon la revendication 1, dans lequel ladite valeur extrême est la valeur la plus grande parmi lesdites sommes obtenues.

3. Procédé selon la revendication 1, dans lequel ladite valeur extrême est la valeur la plus petite parmi lesdites sommes obtenues.

4. Procédé selon la revendication 1, dans lequel lesdites valeurs desdits pixels sont constituées par des 1, 0 et -1, et le total desdites valeurs est zéro.

## FIG. 1

(a)

1a

(b)

| -1 | -1 | -1 | -1 | -1 | -1 | -1 | -1 |
|----|----|----|----|----|----|----|----|
| -1 | -1 | -1 | -1 | -1 | -1 | -1 | -1 |
| -1 | -1 | 1  | 1  | 1  | 1  | 1  | 1  |
| -1 | -1 | 1  | 1  | 1  | 1  | 1  | 1  |
| -1 | -1 | 1  | 1  | 1  | 1  | 1  | 1  |
| -1 | -1 | 1  | 1  | 1  | 1  | 0  | 0  |
| -1 | -1 | 1  | 1  | 1  | 0  | 0  | 0  |
| -1 | -1 | 1  | 1  | 1  | 0  | 0  | 0  |

1b

(c)

1c

(d)

| -1 | -1 | 1  | 1  | 1  | 0  | 0  | 0  |
|----|----|----|----|----|----|----|----|
| -1 | -1 | 1  | 1  | 1  | 0  | 0  | 0  |
| -1 | -1 | 1  | 1  | 1  | 1  | 0  | 0  |
| -1 | -1 | 1  | 1  | 1  | 1  | 1  | 1  |
| -1 | -1 | 1  | 1  | 1  | 1  | 1  | 1  |
| -1 | -1 | 1  | 1  | 1  | 1  | 1  | 1  |
| -1 | -1 | -1 | -1 | -1 | -1 | -1 | -1 |
| -1 | -1 | -1 | -1 | -1 | -1 | -1 | -1 |

1d

(e)

1d

(f)

| 1 | 1 | -1 | -1 | -1 | 0  | 0  | 0  |
|---|---|----|----|----|----|----|----|
| 1 | 1 | -1 | -1 | -1 | 0  | 0  | 0  |
| 1 | 1 | -1 | -1 | -1 | -1 | 0  | 0  |
| 1 | 1 | -1 | -1 | -1 | -1 | -1 | -1 |
| 1 | 1 | -1 | -1 | -1 | -1 | -1 | -1 |
| 1 | 1 | -1 | -1 | -1 | -1 | -1 | -1 |
| 1 | 1 | 1  | 1  | 1  | 1  | 1  | 1  |
| 1 | 1 | 1  | 1  | 1  | 1  | 1  | 1  |

1f

FIG. 2A

|   | 0 | 1 | 2 | 3 | 4 | 5 | 6 | 7 |
|---|---|---|---|---|---|---|---|---|
| 0 | -1 | -1 | -1 | -1 | -1 | -1 | -1 | -1 |
| 1 | -1 | -1 | -1 | -1 | -1 | -1 | -1 | -1 |
| 2 | -1 | -1 | 1 | 1 | 1 | 1 | 1 | 1 |
| 3 | -1 | -1 | 1 | 1 | 1 | 1 | 1 | 1 |
| 4 | -1 | -1 | 1 | 1 | 1 | 1 | 1 | 1 |
| 5 | -1 | -1 | 1 | 1 | 1 | 1 | 0 | 0 |
| 6 | -1 | -1 | 1 | 1 | 1 | 0 | 0 | 0 |
| 7 | -1 | -1 | 1 | 1 | 1 | 0 | 0 | 0 |

~21

FIG. 2B

A

| 21 | 22 | 23 | 22 | 22 | 22 | 21 | 22 | 22 | 22 | 23 | 22 | 22 | 21 | 22 | 22 | 22 | 21 | 22 |
|----|----|----|----|----|----|----|----|----|----|----|----|----|----|----|----|----|----|----|
| 22 | 22 | 22 | 23 | 22 | 22 | 22 | 21 | 22 | 22 | 23 | 23 | 24 | 22 | 22 | 22 | 21 | 22 | 23 | 22 |
| 22 | 22 | 23 | 22 | 22 | 22 | 22 | 22 | 22 | 22 | 22 | 22 | 23 | 22 | 21 | 22 | 22 | 22 | 22 | 22 |
| 22 | 22 | 23 | 22 | 22 | 21 | 22 | 21 | 22 | 22 | 22 | 22 | 22 | 22 | 22 | 22 | 22 | 21 | 22 | 22 |
| 22 | 22 | 22 | 22 | 22 | 21 | 21 | 21 | 22 | 22 | 22 | 22 | 22 | 22 | 22 | 21 | 22 | 21 | 21 | 21 |
| 22 | 22 | 22 | 22 | 22 | 22 | 21 | 22 | 22 | 23 | 22 | 23 | 22 | 22 | 22 | 21 | 21 | 21 | 22 | 22 |
| 22 | 23 | 22 | 22 | 22 | 22 | 22 | 22 | 22 | 22 | 22 | 23 | 22 | 22 | 22 | 21 | 72 | 22 | 22 | 22 |
| 22 | 23 | 22 | 22 | 22 | 22 | 22 | 22 | 22 | 22 | 22 | 24 | 23 | 22 | 22 | 23 | 22 | 22 | 23 | 24 |
| 22 | 22 | 22 | 22 | 22 | 22 | 21 | 22 | 22 | 22 | 23 | 24 | 26 | 25 | 24 | 26 | 23 | 24 | 24 | 25 |
| 24 | 24 | 23 | 21 | 24 | 25 | 26 | 22 | 22 | 22 | 24 | 28 | 29 | 30 | 28 | 26 | 29 | 30 | 28 | 27 |
| 25 | 26 | 27 | 26 | 29 | 28 | 22 | 23 | 23 | 22 | 24 | 30 | 43 | 44 | 46 | 43 | 46 | 47 | 45 | 46 |
| 45 | 46 | 45 | 44 | 47 | 27 | 22 | 22 | 22 | 22 | 23 | 29 | 45 | 47 | 46 | 45 | 46 | 46 | 47 | 47 |
| 44 | 45 | 46 | 49 | 48 | 26 | 21 | 22 | 23 | 23 | 24 | 27 | 44 | 44 | 45 | 46 | 46 | 45 | 48 | 49 |
| 45 | 46 | 46 | 49 | 43 | 27 | 22 | 22 | 22 | 23 | 25 | 30 | 46 | 46 | 46 | 45 | 47 | 44 | 48 | 48 |
| 46 | 45 | 49 | 47 | 48 | 28 | 23 | 22 | 22 | 23 | 25 | 29 | 45 | 46 | 46 | 46 | 48 | 48 | 47 | 48 |
| 45 | 46 | 46 | 47 | 47 | 27 | 23 | 23 | 22 | 22 | 24 | 28 | 46 | 47 | 47 | 46 | 49 | 48 | 47 | 49 |
| 45 | 45 | 47 | 46 | 47 | 30 | 23 | 22 | 22 | 22 | 24 | 27 | 45 | 45 | 46 | 49 | 50 | 49 | 47 | 49 |
| 46 | 46 | 45 | 46 | 47 | 28 | 24 | 23 | 22 | 23 | 23 | 26 | 27 | 28 | 30 | 47 | 50 | 50 | 48 | 49 |
| 46 | 46 | 45 | 46 | 46 | 27 | 23 | 22 | 22 | 22 | 24 | 26 | 27 | 29 | 31 | 48 | 51 | 51 | 49 | 50 |

~22

B

8

FIG. 3

FIG. 4A

FIG. 4B

FIG. 5A

~51

FIG. 5B

~52

c